# EUROPÄISCHE PATENTSCHRIFT

(11) **EP 2 407 374 B1**
(45) Veröffentlichungstag und Bekanntmachung des Hinweises auf die Patenterteilung: **19.12.2012**
(21) Anmeldenummer: 11173549.4
(22) Anmeldetag: 12.07.2011
(51) Int. Cl.: B63J 1/00, B63J 2/12, F25B 27/02

(54) **Seeschiff mit wenigstens einer Kältemaschine**
Seagoing vessel with at least one cooler
Bateau doté d'au moins une machine frigorifique

(30) Priorität: 13.07.2010 DE 102010027004
(43) Veröffentlichungstag der Anmeldung: 18.01.2012
(73) Patentinhaber: Meyer Werft GmbH, 26871 Papenburg (DE)
(72) Erfinder: Untiedt, Gerhard, 49774 Lähden (DE); Scharfe, Jürgen, 85435 Erding (DE); Christenson, Ragner, 18059 Pölchow-Huckstorf (DE)
(74) Vertreter: Siekmann, Gunnar

(56) Entgegenhaltungen:
- US-A1- 2006 107 674

## Beschreibung

Die Erfindung betrifft ein Schiff, vorzugsweise ein Fahrgastschiff oder dergleichen Seeschiff, mit den Merkmalen des Oberbegriffs des Patentanspruchs 1. Weiterhin betrifft die Erfindung ein Verfahren zum Betreiben eines Schiffes der vorbezeichneten Gattung mit den Merkmalen des Oberbegriffs des Patentanspruchs 5.

Die US 2006/0107674 A1 beschreibt ein gattungsgemäßes Fahrzeug.

Da von einer insbesondere für den Schiffsantrieb bestimmten Kraftquelle nur ein bestimmter Teil der eingesetzten Energie in Kraft zum Antrieb des Schiffes umgesetzt wird, bleibt ein nicht unerheblicher Teil der eingesetzten Energie als Wärme ungenutzt. Bisher wurde diese Wärme hauptsächlich nur zum Beheizen von Schiffsräumen und/oder anderen einzelnen Einrichtungen des Schiffes genutzt.

Aufgabe der Erfindung ist es, die Abwärme einer insbesondere für den Schiffsantrieb bestimmten Kraftquelle möglichst in optimaler Weise und vollständig zu verwerten und dadurch den Betrieb eines Schiffes wirtschaftlicher zu gestalten.

Die Lösung dieser Aufgabe erfolgt mit einem Schiff gemäß den Merkmalen des Patentanspruchs 1. Verfahrensmäßig wird die Aufgabe gelöst durch die Merkmale des Patentanspruchs 5. Vorteilhafte Weiterbildungen und Ausgestaltungen der Erfindung sind in den Unteransprüchen beschrieben.

Ein Schiff, vorzugsweise ein Fahrgastschiff oder dergleichen Seeschiff, mit mindestens einer insbesondere für den Schiffsantrieb bestimmten Kraftquelle und mit wenigstens einer Anlage zur Nutzung von Abwärme sowie mit mindestens einer Kältemaschine, zeichnet sich erfindungsgemäß dadurch aus, dass zumindest eine der Kältemaschinen als Absorptionskältemaschine ausgebildet ist, dass mindestens eine der Kraftquellen abwärmeseitig mit mindestens einer Absorptionskältemaschine verbunden ist, die wenigstens eine abwärmeseitig abgehende Abwärmeleitung aufweist und dass mindestens eine der Abwärmeleitungen der jeweiligen Absorptionskältemaschine mit zumindest einer der Anlagen zur Nutzung von Abwärme verbunden ist.

Mit diesem Aufbau von Kraftquelle, Absorptionskältemaschine und Anlage zur Nutzung von Abwärme ist eine mehrfache und somit optimierte Nutzung der von der Kraftquelle bereitgestellten Abwärme gegeben. Diese wird vorteilhafterweise zuerst der dafür bestimmten Absorptionskältemaschine zugeführt und im Rektifikator der Absorptionskältemaschine zum Austreiben des absorbierten Kältemittels aus dem Lösungsmittel genutzt. Von dem Rektifikator der Absorptionskältemaschine ist die Restwärme der Abwärme der Kraftquelle dann über eine erste Abwärmeleitung von der Absorptionskältemaschine zu der Anlage zur Nutzung von Abwärme geführt. Zusätzlich zu der Restwärme am Rektifikator fällt bei Betrieb der Absorptionskältemaschine am Kondensator Abwärme an, die über eine zweite Abwärmeleitung ebenfalls der Anlage zur Nutzung von Abwärme zugeführt wird. In Abhängigkeit von der Dimensionierung der Anlage zur Nutzung von Abwärme kann dabei auch vorgesehen sein, dass von der Absorptionskältemaschine entweder nur die erste Abwärmeleitung oder nur die zweite Abwärmeleitung oder die erste und die zweite Abwärmeleitung zu der Anlage zur Nutzung von Abwärme geführt werden, sowie gegebenenfalls weitere Abwärmeleitungen.

Dabei wird vorteilhafterweise die Abwärme mit der höheren Temperatur von der Kraftquelle zu der Absorptionskältemaschine geführt. Die Abwärme mit der niedrigeren Temperatur an der Abwärmeseite der Absorptionskältemaschine ist für die vorgesehenen Anlagen zur Nutzung von Abwärme ausreichend.

Zumindest die Abwärme vom Kondensator der Absorptionskältemaschine wird mit Vorteil auf ein Wärmeträgermedium übertragen, welches zwischen der Absorptionskältemaschine und der Anlage zur Nutzung von Abwärme im Kreis führbar ist.

Erfindungsgemäß ist wenigstens eine der Anlagen zur Nutzung von Abwärme eine thermische Entsalzungsanlage für Seewasser. Mit einer derartigen Entsalzungsanlage kann die ständig auf dem Schiff vorzuhaltende Menge an Trink- und Betriebswasser auf ein Minimum reduziert werden.

Thermische Entsalzungsanlagen können, insbesondere, wenn die Entsalzungsanlage das Seewasser unter Vakuum verdampft, auf einem niedrigen Temperaturniveau betrieben werden. Die von einer Kraftquelle bereitgestellte Abwärme weist jedoch zumeist deutlich höhere Temperaturen auf, dadurch ist die bereitgestellte Abwärme in einer der Kraftquelle direkt nachgeschalteten Entsalzungsanlage nicht optimal ausnutzbar. Mit der wärmeströmungstechnisch zwischen der Kraftquelle und der Entsalzungsanlage angeordneten Absorptionskältemaschine wird der Entsalzungsanlage mit Vorteil die in der Absorptionskältemaschine genutzte, kühlere Rest- beziehungsweise Abwärme zugeführt. Die Abwärme der Kraftquelle ist somit optimal genutzt.

Andere Anlagen zur Nutzung von Abwärme könnten zum Beispiel ein beheizbares Schwimmbecken auf einem Kreuzfahrtschiff, ein Warmwasserspeicher, insbesondere ein sanitärer Warmwasserspeicher oder Tankheizungen sein, die über mindestens eine der Abwärmeleitungen mit der von der Absorptionskältemaschine zugeführten Rest- beziehungsweise Abwärme beheizt werden. Die Dimensionierung der Anlagen zur Nutzung von Abwärme ist dabei abhängig von der jeweils verfügbaren Rest- beziehungsweise Abwärmemenge.

Um diese von der Absorptionskältemaschine abgeführte Rest- beziehungsweise Abwärme je nach Bedarf in mehr als einer Anlage zur Nutzung von Abwärme einsetzen zu können, ist vorgesehen, dass wenigstens eine der von der Absorptionskältemaschine abwärmeseitig zu einer der Anlagen zur Nutzung von Abwärme abgehenden Abwärmeleitungen mindestens eine Abzweigung aufweist, die zu wenigstens einer weiteren Anlage zur Nutzung von Abwärme führt. Über eine entsprechende Steuerungseinrichtung ist der jeweilige Wärmestrom dann auf die Anlagen zur Nutzung von Abwärme aufteilbar. Eine derartige Verzweigung einer abgehenden Abwärmeleitung zu der weiteren Anlage zur Nutzung von Abwärme kann an der vom Rektifikator der Absorptionskältemaschine abgehenden ersten Abwärmeleitung oder an der vom Kondensator der Absorptionskältemaschine abgehenden zweiten Abwärmeleitung angeordnet sein, wobei auch eine oder mehrere Anlagen zur Nutzung von Abwärme an die erste und die zweite Abwärmeleitung angeschlossen sein können, sowie gegebenenfalls an weitere Abwärmeleitungen.

In der Absorptionskältemaschine wird die von der Kraftquelle zugeführte Abwärmeenergie zum Austreiben des absorbierten Kältemittels aus dem Lösungsmittel genutzt. Die Abwärmeenergie wird somit thermo-chemisch umgewandelt. Das ausgetriebene Kältemittel wird der Kälteseite der Absorptionskältemaschine zugeführt und dort im Kondensator kondensiert. Anschließend wird auf der Kälteseite der Absorptionskältemaschine einem Kühlmedium Wärme entzogen, indem das vom Kondensator herangeführte kondensierte Kältemittel expandiert und verdampft wird. Dazu wird im Kühlmedium enthaltene nutzbare Wärme im Verdampfer von dem Kühlmedium auf das Kältemittel übertragen. Dies erfolgt dadurch, dass die Absorptionskältemaschine kälteseitig einen Kühlkreislauf aufweist, in dem das zu kühlende Kühlmedium geführt ist. Mit Vorteil ist dieser Kühlkreislauf Bestandteil einer im Schiff installierten Kühlanlage. Somit können bei optimaler Nutzung der Abwärme, insbesondere der Abwärme der für den Schiffsantrieb bestimmten Kraftquelle, Räume des Schiffes gekühlt werden, ohne dass zusätzlich Energie für die Kühlanlage zu erzeugen ist.

Weiterhin umfasst die Erfindung ein Verfahren zum Betreiben eines Schiffes der eingangsbezeichneten Gattung, bei dem die von mindestens einer, insbesondere für den Schiffsantrieb bestimmten, Kraftquelle bereitgestellte Wärme zumindest zu einem Teil in einer Anlage zur Nutzung von Abwärme verwendet wird, wobei mindestens ein Teil der von der Kraftquelle bereitgestellten Wärme mindestens einer Absorptionskältemaschine zugeführt wird, mit der Absorptionskältemaschine ein Kühlmedium eines Kühlkreislaufs gekühlt wird, und bei dem wenigstens ein Teil der bei Betrieb der Absorptionskältemaschine anfallenden Abwärme ebenfalls mindestens einer der Anlagen zur Nutzung von Abwärme zugeführt wird.

Dieser Anlage zur Nutzung von Abwärme wird dabei Restwärme der in der Absorptionskältemaschine genutzten Wärme der Kraftquelle und/oder vom Kondensator der Absorptionskältemaschine abgeführte Abwärme zugeleitet. Der Absorptionskältemaschine wird somit Abwärme mit einer höheren Temperatur und der Anlage zur Nutzung von Abwärme wird Abwärme mit einer niedrigeren Temperatur zugeführt, wobei die Abwärme sowohl für die Nutzung in der Absorptionskältemaschine als auch die Nutzung in der Anlage zur Nutzung von Abwärme ausreichend hohe Temperaturen aufweist.

Mit der Zuführung des vorbestimmten Teils der von der Kraftquelle bereitgestellten Wärme zu der Absorptionskältemaschine ist erreicht, dass die Wärme nicht nur als Wärmeenergie genutzt wird, sondern aufgrund der thermochemischen Umwandlung in der Absorptionskältemaschine auch für die Kühlung eines Kühlmediums eines Kühlkreislaufes. Dieser Kühlkreislauf kann in eine Kühlanlage integriert sein und so zur Kühlung von Schiffsräumen dienen. Die Kühlung des Kühlmediums der Klimaanlage erfordert somit mit Vorteil keine weiteren technischen Maßnahmen.

Für eine optimierte Nutzung der bei Betrieb der Absorptionskältemaschine anfallenden Abwärme ist vorgesehen, dass diese zumindest zu einem Teil zur thermischen Entsalzung von Seewasser genutzt wird. Besonders bei einer Verdampfung des Seewassers unter Vakuum werden nicht die hohen Abwärmetemperaturen wie zum Betrieb der Absorptionskältemaschine benötigt, so dass eine thermische Entsalzungsanlage erfindungsgemäß mit der Rest- und Abwärme einer Absorptionskältemaschine betreibbar ist.

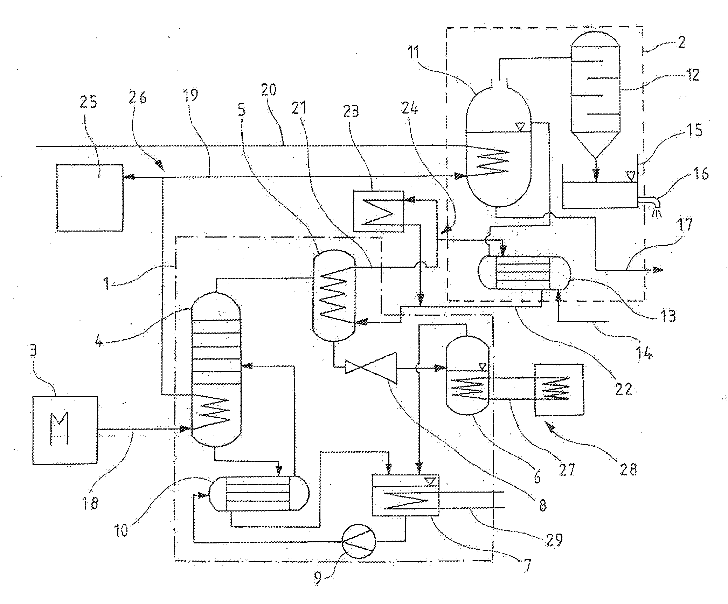

Die Zeichnung zeigt schematisch das Verfahren einer möglichen Ausführung der Erfindung.

Dargestellt sind eine Absorptionskältemaschine 1, die als Block durch eine strichpunktierte Linie angedeutet ist, eine Entsalzungsanlage 2, deren Block durch eine gestrichelte Linie angedeutet ist, eine Kraftquelle 3 sowie die jeweils ab- und zuführenden Leitungen von Stoff- und Wärmeströmen. Weiterhin zeigt die Verfahrensskizze an die Absorptionskältemaschine 1 und an die Entsalzungsanlage 2 wärmeströmungstechnisch angeschlossene Anlagen.

Die Absorptionskältemaschine 1 weist einen Rektifikator 4, einen Kondensator 5, einen Verdampfer 6 und einen Absorber 7 auf. In der Absorptionskältemaschine 1 werden ein Lösungsmittel und ein Kältemittel im Kreis geführt, wobei das Kältemittel im Rektifikator 4 von dem Lösungsmittel abgetrennt und zum Kondensator 5 geführt wird. Im Kondensator 5 wird das Kältemittel verflüssigt und über ein Expansionsventil 8 zum Verdampfer 6 geleitet. Anschließend wird das verdampfte Kältemittel im Absorber 7 vom Lösungsmittel absorbiert. Das Lösungsmittel wird mit einer Lösungsmittelpumpe 9 zwischen dem Rektifikator 4 und dem Absorber 7 im Kreis geführt, wobei sowohl das zum Rektifikator 4 strömende Lösungs- und Kältemittelgemisch als auch das zum Absorber 7 strömende Lösungsmittel im Gegenstrom über einen Wärmetauscher 10 geführt werden.

Die Entsalzungsanlage 2 besteht aus einem Verdampfer 11, einem Kondensator 12 sowie einem Wärmetauscher 13. Das zu entsalzende Seewasser wird bei Betrieb der Entsalzungsanlage 2 über eine Seewasserleitung 14 zugeführt und im Wärmetauscher 13 vorgewärmt. Vom Wärmetauscher 13 gelangt das vorgewärmte Seewasser in den Verdampfer 11, wird im Verdampfer 11 verdampft, anschließend im Kondensator 12 wieder verflüssigt und in einem Behälter 15 aufgefangen. Über eine an den Behälter 15 angeschlossene Frischwasserleitung 16 kann das aufbereitete Frischwasser für eine weitere Verwendung entnommen werden. Eingedampftes Salzwasser ist über eine Salzwasserleitung 17 von dem Verdampfer 11 abführbar.

Von der Kraftquelle 3 ist eine Abwärmeleitung 18 zum Rektifikator 4 der Absorptionskältemaschine 1 angeordnet, mit welcher dem Rektifikator 4 von der Kraftquelle 3 bereitgestellte Abwärmeenergie zum Betrieb der Absorptionskältemaschine 1 zugeführt wird. Die Restwärme, der nicht im Rektifikator 4 genutzten Abwärme der Kraftquelle 3 ist über eine Restwärmeleitung 19 zu dem Verdampfer 11 der Entsalzungsanlage 2 führbar. Mit dieser Restwärme wird das zugeleitete Seewasser im Verdampfer 11 der Entsalzungsanlage 2 zum Sieden gebracht und verdampft. Nach der Nutzung der Restwärme im Verdampfer 11 wird diese über die Ableitung 20 von der Entsalzungsanlage 2 weggeleitet.

Der Entsalzungsanlage 2 wird beim Betrieb der Absorptionskältemaschine 1 zudem am Kondensator 5 der Absorptionskältemaschine 1 anfallende Abwärme zugeführt. Dazu sind zwischen dem Kondensator 5 und dem Wärmetauscher 13 eine Zuleitung 21 sowie eine Rückleitung 22 angeordnet, so dass zwischen dem Kondensator 5 und dem Wärmetauscher 13 ein Wärmeträgermedium im Kreis geführt werden kann. Dieses Wärmeträgermedium wird im Kondensator 5 erhitzt, über die Zuleitung 21 zum Wärmetauscher 13 geleitet und dient im Wärmetauscher 13 zum Anwärmen des über die Seewasserleitung 14 zugeführten Seewassers. Das abgekühlte Wärmeträgermedium wird über die Rückleitung 22 zum Kondensator 5 zurückgeführt.

An diesen Kreislauf des Wärmeträgermediums ist eine Heizung 23 angeschlossen, welcher über eine Verzweigung 24 der Zuleitung 21 warmes Wärmeträgermedium zugeführt werden kann. Das in der Heizung 23 genutzte Wärmeträgermedium wird der Rückleitung 22 zugeführt. Eine weitere Anlage zur Nutzung von Abwärme 25 ist über die Abzweigung 26 an die Restwärmeleitung 19 zwischen Rektifikator 4 und Verdampfer 11 angeschlossen.

In den Verdampfer 6 der Absorptionskältemaschine 1 ist zudem ein Abschnitt eines Kühlkreislaufs 27 einer Klimaanlage 28 integriert, wobei erwärmtes Kühlmedium des Kühlkreislaufs 27 im Verdampfer 6 zum Verdampfen des Kältemittels verwendet wird. Dabei wird das Kühlmedium abgekühlt und dem zu klimatisierenden Bereich der Klimaanlage 28 zugeleitet. Weiterhin wird von der Absorptionskältemaschine 1 am Absorber 7 Wärme über eine Kühleinheit 29 abgeführt, die für weitere Wärmenutzungsprozesse eingesetzt werden kann.

## Patentansprüche

1. Schiff, vorzugsweise Fahrgastschiff oder dergleichen Seeschiff, mit mindestens einer insbesondere für den Schiffsantrieb bestimmten Kraftquelle und mit wenigstens einer Anlage zur Nutzung von Abwärme sowie mit mindestens einer Kältemaschine,
wobei zumindest eine der Kältemaschinen als Absorptionskältemaschine ausgebildet ist, mindestens eine der Kraftquellen abwärmeseitig mit mindestens einer Absorptionskältemaschine verbunden ist, die Absorptionskältemaschine wenigstens eine abwärmeseitig abgehende Abwärmeleitung aufweist, und mindestens eine der Abwärmeleitungen der Absorptionskältemaschine mit zumindest einer der Anlagen zur Nutzung von Abwärme verbunden ist,
**dadurch gekennzeichnet,**
**dass** wenigstens eine der Anlagen zur Nutzung von Abwärme eine thermische Entsalzungsanlage für Seewasser ist.

2. Schiff nach Anspruch 1, **dadurch gekennzeichnet, dass** wenigstens eine der von der Absorptionskältemaschine abwärmeseitig zu einer der Anlagen zur Nutzung von Abwärme abgehenden Abwärmeleitungen mindestens eine Verzweigung zu wenigstens einer der weiteren Anlagen zur Nutzung von Abwärme aufweist.

3. Schiff nach einem der vorhergehenden Ansprüche, **dadurch gekennzeichnet, dass** die Absorptionskältemaschine kälteseitig einen Kühlkreislauf aufweist.

4. Schiff nach Anspruch 3, **dadurch gekennzeichnet, dass** der Kühlkreislauf Bestandteil einer im Schiff installierten Kühlanlage ist.

5. Verfahren zum Betreiben eines Schiffes, vorzugsweise eines Fahrgastschiffes oder dergleichen Seeschiff nach Anspruch 1, bei dem die von mindestens einer insbesondere für den Schiffsantrieb bestimmten Kraftquelle bereitgestellte Wärme zumindest zu einem Teil in einer Anlage zur Nutzung von Abwärme verwendet wird, wobei mindestens ein Teil der von der Kraftquelle bereitgestellten Wärme mindestens einer Absorptionskältemaschine zugeführt wird, mit der Absorptionskältemaschine ein Kühlmedium eines Kühlkreislaufes gekühlt wird, und wenigstens ein Teil der bei Betrieb der Absorptionskältemaschine anfallenden Abwärme mindestens einer Anlage zur Nutzung von Abwärme zugeführt wird,
**dadurch gekennzeichnet,**
**dass** zumindest ein Teil der bei Betrieb der Absorptionskältemaschine anfallende Abwärme zur thermischen Entsalzung von Seewasser genutzt wird.

## Claims

1. A ship, preferably passenger ship or similar sea-going vessel, having at least one power source in particular intended for the ship's drive and having at least one installation for utilizing waste heat as well as at least one refrigeration machine,
wherein at least one of the refrigeration machines is configured as an absorption refrigeration machine, at least one of the power sources is connected on the waste heat side to at least one absorption refrigeration machine, the absorption refrigeration machine has at least one waste heat line leading off on the waste heat side and at least one of the waste heat lines of the absorption refrigeration machine is connected to at least one of the installations for utilizing waste heat, **characterised in that** at least one of the installations for utilizing waste heat is a thermal desalination plant for seawater.

2. The ship according to claim 1, **characterised in that** at least one of the waste heat lines leading off from the absorption refrigeration machine on the waste heat side to one of the installations for utilizing waste heat has at least one branch to at least one of the other installations for utilizing waste heat.

3. The ship according to any one of the preceding claims, **characterised in that** the absorption refrigeration machine has a cooling circuit on the refrigeration side.

4. The ship according to claim 3, **characterised in that** the cooling circuit is part of a cooling system installed in the ship.

5. A method for operating a ship, preferably a passenger ship or similar sea-going vessel according to claim 1, in which the heat provided by at least one power source intended in particular for the ship's drive is used at least in part in an installation for utilizing waste heat, wherein at least a part of the heat provided by the power source is supplied to at least one absorption refrigeration machine, a cooling medium of a cooling circuit is cooled with the absorption refrigeration machine and at least a part of the waste heat accumulating during operation of the absorption refrigeration machine is supplied to at least one installation for utilizing waste heat, **characterised in that** at least a part of the waste heat accumulating during operation of the absorption refrigeration machine is used for the thermal desalination of seawater.

## Revendications

1. Bateau, de préférence bateau de passagers ou navire similaire, comprenant au moins une source d'énergie définie en particulier pour l'entraînement du bateau et au moins une installation pour exploiter la chaleur dissipée ainsi qu'au moins une machine frigorifique,
dans lequel au moins une des machines frigorifiques est conçue en tant que machine frigorifique à absorption, au moins une des sources d'énergie est reliée côté chaleur dissipée à au moins une machine frigorifique à absorption, la machine frigorifique à absorption présente au moins une conduite de chaleur dissipée partant côté chaleur dissipée et au moins une des conduites de chaleur dissipée de la machine frigorifique à absorption est reliée à au moins une des installations pour exploiter la chaleur dissipée,
**caractérisé en ce qu'**au moins une des installations pour exploiter la chaleur dissipée est une installation de dessalage thermique.

2. Bateau selon la revendication 1, **caractérisé en ce qu'**au moins une des conduites de chaleur dissipée partant côté chaleur dissipée de la machine frigorifique à absorption vers l'une des installations pour exploiter la chaleur dissipée, présente au moins un branchement vers au moins une des autres installations pour exploiter la chaleur dissipée.

3. Bateau selon la revendication 1 ou 2, **caractérisé en ce que** la machine frigorifique à absorption présente un circuit de refroidissement côté froid.

4. Bateau selon la revendication 3, **caractérisé en ce que** le circuit de refroidissement fait partie d'une installation de refroidissement installée dans le bateau.

5. Procédé pour exploiter un bateau, de préférence un bateau de passagers ou navire similaire, selon la revendication 1, dans lequel la chaleur mise à disposition par au moins une source d'énergie définie en particulier pour l'entraînement du bateau, est employée au moins d'une part dans une installation pour exploiter la chaleur dissipée, sachant qu'au moins une partie de la chaleur mise à disposition par la source d'énergie est amenée à au moins une machine frigorifique à absorption, qu'un fluide de refroidissement d'un circuit de refroidissement est refroidi avec la machine frigorifique à absorption , et au moins une partie de la chaleur produite par le fonctionnement de la machine frigorifique à absorption est amenée à au moins une installation pour exploiter la chaleur dissipée,
**caractérisé en ce qu'**au moins une partie de la chaleur produite par le fonctionnement de la machine frigorifique à absorption est utilisée pour le dessalage thermique de l'eau de mer.
